Europäisches Patentamt

European Patent Office

Office européen des brevets

(19)

(11) Veröffentlichungsnummer: **0 033 884**
**A1**

(12) **EUROPÄISCHE PATENTANMELDUNG**

(21) Anmeldenummer: 81100539.6

(22) Anmeldetag: 26.01.81

(51) Int. Cl.³: **C 08 F 210/12,** C 08 F 210/14,
C 08 F 4/64

(30) Priorität: 07.02.80 DE 3004420

(43) Veröffentlichungstag der Anmeldung: 19.08.81
Patentblatt 81/33

(84) Benannte Vertragsstaaten: **BE DE FR GB IT NL**

(71) Anmelder: **BAYER AG, Zentralbereich Patente, Marken
und Lizenzen, D-5090 Leverkusen 1, Bayerwerk (DE)**

(72) Erfinder: **Wieder, Wolfgang, Dr., Walter-Flex-Strasse 11,
D-5090, Leverkusen 1 (DE)**
Erfinder: **Witte, Josef, Dr., Haferkamp 10,
D-5000 Köln 80 (DE)**
Erfinder: **Marwede, Günter, Dr., Am Portzenacker 24,
D-5000 Köln 80 (DE)**

(54) **Verfahren zur Copolymerisation von Isoolefinen mit Dimethylbutadien.**

(57) Verfahren zur Copolymerisation von Isoolefinen mit Dimethylbutadien in Lösung oder in Masse in Gegenwart eines Katalysators, Entaktivierung des Katalysators nach Beendigung der Polymerisation und anschließender Isolierung des Polymerisates in bekannter Weise, das dadurch gekennzeichnet ist, daß die Polymerisation in Gegenwart eines Katalysators durchgeführt wird, der ein Umsetzungsprodukt aus

a) einer aluminiumorganischen Verbindung $R_2AlX$, $R_3Al_2X_3$ und/oder $R\ AlX_2$ wobei R einen gesättigten (cyclo)-aliphatischen Kohlenwasserstoffrest mit 1–10 C-Atomen und

b) $TiX_4$, wobei X ein Halogenatom darstellt, enthält.

- 1 -

0033884

BAYER AKTIENGESELLSCHAFT     5090 Leverkusen, Bayerwerk
Zentralbereich
Patene, Marken und Lizenzen     E/Kü-c


Verfahren zur Copolymerisation von Isoolefinen mit
Dimethylbutadien

Die vorliegende Erfindung betrifft ein Verfahren zur
Copolymerisation von Isoolefinen, insbesondere von
Isobuten, mit Dimethylbutadien. Dabei werden metallorganische Mischkatalysatoren verwendet, die es gestatten, die Polymerisation in unpolaren Lösungsmitteln,
wahlweise auch in Masse, und bei höheren Reaktionstemperaturen als bei den bekannten kationischen Polymerisationsverfahren üblich, durchzuführen.

Es ist bekannt, daß Isobuten-Copolymere industriell
durch Polymerisationsverfahren hergestellt werden, die
unter Verwendung von Initiatoren vom Friedel-Crafts-
Typ arbeiten, s. z.B. J.P. Kennedy und E.G.M. Törnquist, Polymer Chemistry of Synthetic Elastomers,
Wiley-Interscience, New York 1968.

Copolymere von Isobuten mit 0,5 - 5 Mol % Isopren,
welche als Butylkautschuk bezeichnet werden, werden
beispielsweise durch Polymerisation des Olefingemisches mit einem Friedel-Crafts-Katalysator, vorzugsweise $AlCl_3$ oder $EtAlCl_2$, bei einer Temperatur

Le A 20 135 - EP

von -100°C in einem polaren Lösungsmittel, beispielsweise Methylchlorid, hergestellt. Das Polymerisat fällt
aus der Lösung jedoch aus, die Umsätze sind gering.
Wird die Polymerisation bei wesentlich höheren Temperaturen als etwa -100°C, beispielsweise bei -50°C durchgeführt, dann sinkt das Molekulargewicht des gebildeten Produkts auf Werte ab, die für eine technische
Verwendung uninteressant sind.

Es hat nicht an Versuchen gefehlt, hochmolekularen
Butylkautschuk bei höheren Reaktionstemperaturen als
-100°C, beispielsweise bei -40°C, herzustellen. In
den GB-PS 1 094 728, DE-OS 2 154 635 und US-PS 4 029 866
beispielsweise werden synkatalytische Systeme beschrieben, die aus einer metallorganischen Verbindung,
z.B. $Et_2AlCl$, und einem Cokatalysator bestehen. Diese
Systeme arbeiten vorzugsweise in polaren Lösungsmitteln.
In der DE-OS 2 257 466 besteht das synkatalytische
System z.B. aus $Et_2AlCl$ und $VOCl_3$.

Die DE-OS 2 257 480 beschreibt ein Verfahren zur Herstellung von Polymeren und Copolymeren des Isobutens,
bei dem das Katalysatorsystem aus $Et_2AlCl/Ti(O-nC_4H_9)Cl_3$ besteht. Aus Beispiel 17 geht hervor, daß durch
die Verwendung von Pentan statt Methylchlorid als
Reaktionsmedium ein vergleichsweise niedriges Molekulargewicht resultiert. In der DE-OS 2 257 494 wird
ein Katalysatorsystem beschrieben, das aus einer schwachen Lewis-Säure, z.B. AlEt(OEt)Cl, und einer starken
Lewis-Säure, beispielsweise $TiCl_4$, besteht. In der

Le A 20 135

DE-OS 2 257 479 wird ein Katalysatorsystem angegeben, das auf dem Zusammenwirken einer starken Lewis-Säure, wie z.B. $AlCl_3$, $EtAlCl_2$, $TiCl_4$ mit einer metallorganischen Verbindung wie $SnR_4$, $PbR_4$, $Ti(aryl)_4$ oder einem Alkoholat wie $TiCl_2(OR)_2$, $Ti(OR)_4$ oder $VO(OR)_3$, beruht.

Andererseits ist es auch bekannt, daß sich Katalysatorsysteme wie z.B. $AlR_3/TiCl_4$ (Ziegler-Katalysatoren), die für die Niederdruck-Polymerisation von $\mathcal{L}$-Olefinen Verwendung finden, nicht ohne weiteres zur Polymerisation von Isoolefinen eignen. (S. dazu J.P. Kennedy u. A.W. Langer, Advan. Polymer Sci. 3, 508 (1964). Zum Stand der Technik siehe auch eine kürzlich erschienene Monographie: J.P. Kennedy, Cationic Polymerisation of Olefins. A. Critical Inventory, Wiley-Interscience, New York 1975). In der US-PS 3 066 123, die aktivierte Friedel-Crafts-Katalysatoren wie beispielsweise $SnCl_4/Et_3Al$ bzw. $TiCl_4/Et_3Al$ beschreibt, wird festgestellt, daß der Katalysator nur dann polymerisationsaktiv ist, wenn die Friedel-Crafts-Komponente im Überschuß vorliegt.

Die Polymerisationen wurden sowohl in aliphatischen Lösungsmitteln als auch in Methylchlorid durchgeführt. Demgegenüber wird in der DE-OS 1 963 684 festgestellt, daß hochmolekularer Butylkautschuk bei vergleichsweise hohen Temperaturen (z.B. -50°C) in Gegenwart von metallorganischen Mischkatalysatoren, z.B. $Et_2AlCl/$ $TiCl_4$, hergestellt werden kann, wobei ein molares Ver-

Le A 20 135

hältnis $Et_2AlCl/TiCl_4$ zwischen 100 und 10 : 1 besonders bevorzugt wird. Gemäß dieser Patentschrift werden stark ungesättigte Produkte erhalten, wenn das Molverhältnis $Et_2AlCl/TiCl_4$ vorzugsweise zwischen 10 und 3 liegt, wobei unter "stark ungesättigt" offenbar etwa 5 Mol % Unsättigung verstanden werden. Dabei ist festzustellen (s. Beispiel 15), daß bei einem Molverhältnis Al/Ti kleiner als 10 der Umsatz an gebildetem Produkt stark abfällt. In Beispiel 16 wird nachgewiesen, daß ein Zusatz polarer Lösungsmittel zur Erzielung brauchbarer Umsätze unabdingbar ist. In sämtlichen angeführten Beispielen werden aber nur relativ bescheidene Umsätze erzielt, typisch sind 20 bis 40 %, auf jeden Fall aber weniger als 50 %. Dabei ist insbesondere der Verbrauch an aluminiumorganischer Verbindung hoch, beispielsweise 30 - 90 mMol $Et_2AlCl$ pro 100 g Produkt. Es werden keine Maßnahmen genannt, die zur Erhöhung der Umsätze bzw. Erniedrigung des Katalysatorverbrauchs führen könnten.

In einem Lösungspolymerisationsverfahren, welches einen Gegenstand der vorliegenden Erfindung darstellt, werden dagegen im allgemeinen hohe Umsätze bei niedrigem Katalysatorverbrauch angestrebt. Die GB-PS 904 995 beschreibt ein Polymerisationsverfahren zur Herstellung von Isoolefin/Diolefin-Copolymeren, welche in konzentrierter Lösung oder in Masse hergestellt werden.

Es wird ein metallorganischer Mischkatalysator be-

Le A 20 135

schrieben, vorzugsweise Triisobutylaluminium/Titan-
tetrachlorid, der präformiert werden kann. Das molare
Verhältnis Al/Ti soll weniger als 1,3, vorzugsweise
weniger als 1 : 1 betragen. Die Reaktionszeiten bei
dem Verfahren nach GB 904 995 sind lang, der Katalysatorverbrauch ist hoch.

Es war nach dem Stand der Technik nicht zu erwarten,
daß hochmolekulare Isoolefin-Copolymere vom Butyl-Typ,
also z.B. Isobuten-Diolefin-Copolymere mit Molekulargewichten über 100 000 und Unsättigungen zwischen etwa
0,5 und 2,5 Mol %, in einem Lösungs- oder Masse-Polymerisationsverfahren mit guten Umsätzen bei relativ
hohen Temperaturen, beispielsweise etwa -50 °C, erhalten werden können, wobei vor allem auf Zusätze
polarer Lösungsmittel verzichtet werden kann.

Es wurde nun gefunden, daß spezielle metallorganische
Mischkatalysatoren vom Ziegler-Typ Isoolefine, vornehmlich Isobuten, zu hochmolekularen Produkten polymerisieren können.

Die Erfindung betrifft daher ein Verfahren zur Copolymerisation von Isoolefinen, insbesondere von Isobuten, mit Dimethylbutadien, in Lösung oder in Masse, daß
dadurch gekennzeichnet ist, daß das Isoolefin in Gegenwart eines Katalysatorsystems polymerisiert wird,
welches ein Umsetzungsprodukt aus

  a)  einer aluminiumorganischen Verbindung,
      ausgewählt aus
      $R_2AlX$, $R_3Al_2X_3$ und $RAlX_2$

Le A 20 135

wobei R gesättigte (cyclo-)aliphatische Kohlenwasserstoffreste mit 1 bis 10 C-Atomen bedeuten und X ein Halogenatom (Cl, Br, J) ist und

b) $TiX_4$, wobei X ein Halogenatom (Cl,Br,J) ist, enthält.

Beispiele für aluminiumorganische Verbindungen a) sind Dimetylaluminiumchlorid, Diethylaluminiumchlorid, Diisobutylaluminiumchlorid, Dimethylaluminiumbromid, Diethylaluminiumbromid, Diisobutylaluminiumbromid, Diethylaluminiumiodid, Ethylaluminiumusesquichlorid, Ethylaluminiumsesquibromid, Ethylaluminiumdichlorid, Isobutylaluminiumdichlorid, Ethylaluminiumdibromid, Ethylaluminiumdiiodid. Bevorzugt werden Diethylaluminiumchlorid bzw. Ethylaluminiumsesquichlorid.

Beispiele für Verbindungen b) sind Titantetrachlorid, Titantetrabromid, Titantetraidoid. Bevorzugt wird Titantetrachlorid.

Das molare Verhältnis der Katalysatorkomponenten a/b kann zwischen 1 und 10 : 1 liegen, vorzugsweise zwischen 1,5 und 5 : 1. Weiterhin ist das erfindungsgemäße Katalysatorsystem dadurch gekennzeichnet, daß man die Katalysatorkomponenten in einem inerten Lösungsmittel in Abwesenheit von Monomer bei Konzentrationen von 0,5 bis 0,01 Mol/l Ti umsetzt und anschließend präformiert. Die Dauer der Präformierung kann zwischen wenigen Minuten und einigen Tagen betragen, wobei die optimale Präformierungszeit von der Temperatur bei der Präformierung abhängt, die zwischen -30°C und +60°C liegen kann.

Die Polymerisation wird im allgemeinen in einem inerten Lösungsmittel durchgeführt, sie kann jedoch auch in Masse erfolgen, wobei nicht umgesetztes Monomer als Solvens dient. Beispiele für inerte Lösungsmittel, die auch bei der erfindungsgemäßen Präformierung zur Anwendung kommen, sind gesättigte Kohlenwasserstoffe mit 4 - 10 C-Atomen, beispielsweise Butan, Pentan, Hexan, Heptan; cyclische gesättigte Kohlenwasserstoffe wie Methylcyclohexan, Methylcyclopentan; aromatische Kohlenwasserstoffe wie Toluol oder Xylol. Diese Lösungsmittel können einzeln oder in Gemischen eingesetzt werden. Bevorzugt werden aliphatische Lösungsmittel, besonders bevorzugt wird Hexan.

Die Menge des erfindungsgemäß zu verwendenden Katalysators kann zwischen 1 und 0,0001 Mol %, vorzugsweise zwischen 0,5 und 0,001 Mol % liegen, bezogen auf die eingesetzten Monomeren.

Die Polymerisationstemperatur liegt zwischen -100°C und +50°C, vorzugsweise zwischen -10°C und -60°C, beispielsweise bei -50°C; sie kann in geeigneter Weise entsprechen den gewünschten Eigenschaften des Polymerisats gewählt werden.

Ein Vorteil des erfindunsgemäßen Verfahrens ist darin

Le A 20 135

zu sehen, daß die Polymerisation bei höheren Temperaturen als in der Technik üblich durchgeführt werden kann, ohne daß das Molekulargewicht der Produkte zu stark erniedrigt wird. Ein weiterer Vorteil des Verfahrens besteht darin, daß die Polymerisation in Lösung oder in Substanz stattfindet, d.h. auch im Verlauf der Reaktion homogen bleibt, was aus verfahrenstechnischen Gründen erwünscht ist. Ein noch größerer Vorteil des erfindungsgemäßen Verfahrens besteht darin, daß die Polymerisationsreaktion bei guten Umsätzen ohne stürmische Wärmeentwicklung abläuft, was eine gute Reaktionskontrolle ermöglicht. Bei den bisher bekannten Verfahren zur Polymerisation von Isoolefinen wird, selbst bei nur mäßigen Umsätzen, oft eine beträchtliche Wärmeentwicklung beobachtet (s. z.B. DE-OS 1 963 684, Beispiel 1). Es ist klar, daß solche Reaktionen nur schwierig zu beherrschen sind.

Die erfindungsgemäße Polymerisation kann kontinuierlich oder diskontinuierlich ausgeführt werden. Nach Beendigung der Polymerisation wird der Katalysator durch Zugabe von Alkoholen, Aminen oder Carbonsäuren entaktiviert; das Polymerisat kann in üblicher Weise durch Strippen, Ausfällen oder Eindampfen isoliert werden. Es wird zweckmäßigerweise vor der Aufarbeitung stabilisiert, beispielsweise durch Zusatz von 2,6-Di-tert.-Butylmethylphenol.

Weitere Einzelheiten des erfindungsgemäßen Polymeri-

Le A 20 135

sationsverfahrens ergeben sich aus den folgenden Beispielen.

Alle Arbeiten wurden mit trockenen Reagenzien unter
$N_2$-Atmosphäre mit getrockneten Apparaturen ausgeführt.
$[\eta]$-Werte wurden in Toluol bei 30°C bestimmt.

Vergleichsbeispiel 1:

Ein Katalysator, bestehend aus 1,0 mMol $TiCl_4$ und 0,7
mMol i-$Bu_3$Al wurde 5 Minuten in 10 ml Hexan bei Raumtemperatur präformiert. Dieser Katalysator entspricht
hinsichtlich Komponenten und molarem Verhältnis Ti/Al
der GB-PS 904 995. Ein Polymerisationsansatz, bestehend
aus 80 ml Hexan, 110 g Isobuten und 3,5 g Isopren wurde
bei -75°C mit diesem Katalysator beschickt. Nach fünfstündiger Reaktion wurde in Ethanol ausgefällt und bei
50°C im Vakuum getrocknet. Ausbeute 4 %, $[\eta]$=0,75 dl/g.

Le A 20 135

Beispiel 1

Ein Katalysator wurde durch 19-stündige Präformierung von 8,0 mMol $TiCl_4$ und 16,0 mMol $Et_2AlCl$ in 160 ml Hexan bei Raumtemperatur hergestellt. Die Polymerisationslösung bestand aus 4 1 Hexan, 800 g Isobuten und 400 mMol 2,3-Dimethylbutadien. Nach Zugabe des Katalysators bei -60°C wurde diese Temperatur durch Außenkühlung gehalten. Nach 8 h wurde mit Ethanol, das etwas 2,6-Di-tert.-butylmethylphenol enthielt, abgestoppt und das Produkt in Ethanol ausgefällt. Das Produkt wurde in Ethanol ausgeknetet und im Vakuum bei 50°C getrocknet. Ausbeute 73 % $[\eta]$ = 1,20 dl/g, Jodzahl 20,4, ML 1 + 4/100°C : 51.

Beispiel 2

Der Katalysator wurde hergestellt durch 19-stündige Präformierung von 1,0 mMol $TiCl_4$ und 4,0 mMol $Et_2AlCl$ in 50 ml Hexan bei Raumtemperatur. Der Polymerisationsansatz bestand aus 200 g Isobuten und 100 mMol Dimethylbutadien, es wurde also kein Lösungsmittel verwendet. Nach Zugabe der Katalysatorsuspension stieg die Temperatur von anfänglich -40°C auf -35°C. Nach 4-stündiger Reaktion wurde abgestoppt und aufgearbeitet wie in Beispiel 2. Ausbeute 68 % $[\eta]$= 1,00 dl/g, Jodzahl 20,8.

Le A 2o 135

Beispiel 3

Die Präformierung dieses Katalysators erfolgte durch 19-stündiges Rühren von 2 mMol $TiCl_4$ und 8 mMol $Et_2AlCl$ in 20 ml Hexan bei Raumtemperatur. Die erhaltene Suspension wurde zu einer auf -40°C gekühlten Monomermischung aus 200 g Isobuten und 100 mMol Dimethylbutadien gegeben, woraufhin die Temperatur auf -31°C anstieg. Nach 30 Minuten wurde abgestoppt. Ausbeute nach Aufarbeitung: 43 %, $[\eta]$ = 0,95 dl/g, Jodzahl 20,3.

Um die chemische Uneinheitlichkeit des Produktes zu ermitteln, wurde eine Probe aus Toluol mit Methanol fraktioniert; von den Fraktionen wurden Grenzviskositäten (in THF) und die Jodzahlen ermittelt. Aus den Ergebnissen (s. nachfolgende Tabelle) geht hervor, daß das Dimethylbutadien statistisch eingebaut ist.

| Fraktion | Gew.% | $[\eta]$ dl/g | Jodzahl |
|----------|-------|---------------|---------|
| 1 | 10,79 | 1,90 | 20,6 |
| 2 | 27,79 | 1,39 | 21,9 |
| 3 | 19,40 | 1,13 | - |
| 4 | 21,68 | 0,84 | 23,0 |
| 5 | 14,04 | 0,57 | 24,2 |
| 6 | 6,55 | 0,27 | 24,9 |

Le A 2o 135

Beispiel 4

Ein Katalysator wurde wie in den vorhergehenden Beispielen aus 2 mMol $TiCl_4$ und 6 mMol $Et_2AlCl$ in 10 ml
Hexan präformiert. Die Monomerlösung bestand aus
200 ml Hexan, 200 g Isobuten und 100 mMol Dimethylbutadien. Reaktionstemperatur -40°C. Nach 4-stündiger
Polymerisation wurde in 77-prozentiger Ausbeute ein
Kautschuk mit folgenden Eigenschaften isoliert: ML
1 + 4/100°C : 40, Jodzahl 21,6.


Beispiel 5

Der Katalysator wurde erhalten durch Präformierung von
2 mMol $TiCl_4$ und 4 mMol $Et_2AlCl$ in 100 ml Hexan. Mit
der Hälfte wurde die Polymerisation einer Lösung aus
500 ml Hexan, 200 g Isobuten und 100 mMol Dimethylbutadien bei -60°C eingeleitet. Nach 2 h wurde die
zweite Hälfte des Katalysators zugegeben. Nach weiteren 2 h wurde die Reaktion abgestoppt und das Produkt isoliert. Ausbeute 93 %, $[\eta]$= 1,20 dl/g, Jodzahl 19,8, ML 1 + 4/100°C : 45.


Le A 2o 135

## Beispiel 6

Ein Ansatz aus 1000 ml Hexan, 200 g Isobuten und 100 mMol Dimethylbutadien wurde mit einem nicht präformierten Katalysator aus 6 mMol $Et_2AlCl$ und 2 mMol $TiCl_4$ beschickt. Nach 4 h Reaktion bei -40°C wurden etwa 3 g eines kautschukartigen Polymeren isoliert. Dies Beispiel zeigt, daß zur Erzielung eines befriedigenden Umsatzes eine erfindungsgemäße Präformierung des Katalysators unabdingbar ist.

## Beispiel 7

In einem trockenen Kolben wurden bei -40°C 200 g Isobuten und 100 mMol Dimethylbutadien vorgelegt. Ein Katalysator wurde hergestellt durch Präformierung der nachfolgend (s. Tabelle) angegebenen Mengen $Et_2AlCl$ und $TiCl_4$ in jeweils 20 ml Hexan (19 h bei Raumtemperatur).

| mMol $Et_2AlCl$ | mMol $TiCl_4$ | Al/Ti | Ausb.% | $[\eta]$ dl/g |
|---|---|---|---|---|
| 8,0 | 2,0 | 4,0 | 51 | 0,98 |
| 9,0 | 2,0 | 4,5 | 23 | 0,93 |
| 10,0 | 2,0 | 5,0 | 3 | 0,53 |

Aus dieser Tabelle geht hervor, daß das molare Verhältnis Al/Ti unter 10 liegen sollte.

Le A 2o 135

## Patentansprüche

1) Verfahren zur Copolymerisation von Isoolefinen mit Dimethylbutadien in Lösung oder in Masse in Gegenwart eines Katalysators, Entaktivierung des Katalysators nach Beendigung der Polymerisation und anschließender Isolierung des Polymerisates in bekannter Weise, dadurch gekennzeichnet, daß die Polymerisation in Gegenwart eines Katalysators durchgeführt wird, der ein Umsetzungsprodukt aus

a) einer aluminiumorganischen Verbindung $R_2AlX$, $R_3Al_2X_3$ und/oder $R\,AlX_2$ wobei R einen gesättigten (cyclo)-aliphatischen Kohlenwasserstoffrest mit 1 - 10 C-Atomen und X ein Halogenatom darstellen und

b) $TiX_4$, wobei X ein Halogenatom darstellt, enthält.

2) Verfahren nach Anspruch 1, dadurch gekennzeichnet, daß als Isoolefin Isobuten verwendet wird.

3) Verfahren nach Anspruch 1, dadurch gekennzeichnet, daß als Komponente

a) Diethylaluminiumchlorid oder Ethylaluminium-Sesquichlorid verwendet wird.

Le A 20 135

4) Verfahren nach Anspruch 1, dadurch gekennzeichnet, daß als Komponete b) Titantetrachlorid verwendet wird.

5) Verfahren nach Ansprüchen 1 - 4, dadurch gekennzeichnet, daß das molare Verhältnis der Komponenten a/b zwischen 1 und 10 : 1 liegt.

6) Verfahren nach Ansprüchen 1 - 4, dadurch gekennzeichnet, daß das molare Verhältnis der Komponenten a/b zwischen 1 ,5 und 5 : 1 liegt.

7) Verfahren nach Ansprüchen 1 - 6, dadurch gekennzeichnet, daß der Katalysator in einem inerten Lösungsmittel in Abwesenheit von Monomeren präformiert wird.

8) Verfahren nach Ansprüchen 1 - 7, dadurch gekennzeichnet, daß der Katalysator in Mengen zwischen 1 und 0,0001 Mol%, bezogen auf die eingesetzten Monomeren eingesetzt wird.

9) Verfahren nach Ansprüchen 1 - 7, dadurch gekennzeichnet, daß der Katalysator in Mengen zwischen 0,5 und 0,001 Mol%, bezogen auf die eingesetzten Monomeren eingesetzt wird.

10) Verfahren nach Ansprüchen 1 - 9, dadurch gekennzeichnet, daß bei Temperaturen zwischen -100°C und +50°C polymerisiert wird.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>FR - A - 1 139 418</u> (GOODRICH-GULF) <br><br> \* Zusammenfassung; a-e, g-1,o; Seite 2, rechte Spalte, Zeile 49 bis Seite 3, linke Spalte, Zeile 6, Zeilen 25-30; Seite 4, rechte Spalte, Zeilen 36-44; Seite 5, linke Spalte, Zeile 15, rechte Spalte, Zeile 6. \* <br><br> & DE - A - 1 420 456 <br> --- | 1-10 |
| D | <u>GB - A - 904 995</u> (POLYMER CORP.) <br><br> \* Ansprüche 1,2,6,9,11; Seite 2, Zeilen 57-70, 83-91 \* <br><br> & DE - B - 1 178 601 <br> --- | 1-10 |
| D | <u>DE - A - 1 963 684</u> (ESSO) <br><br> \* Ansprüche 1-5,8 \* | 1-4,8, 10 |

---

**KLASSIFIKATION DER ANMELDUNG (Int Cl.)**

C 08 F 210/12
C 08 F 210/14
C 08 F   4/64

**RECHERCHIERTE SACHGEBIETE (Int Cl.)**

C 08 F 210/10
C 08 F 210/12
C 08 F 210/14
C 08 F   4/64
C 08 F   4/62

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14.05.1981 | WEBER |

EPA form 1503.1  06.78